# EUROPÄISCHE PATENTSCHRIFT

(11) **EP 4 113 101 B1**
(45) Veröffentlichungstag und Bekanntmachung des Hinweises auf die Patenterteilung: **09.08.2023**
(21) Anmeldenummer: 21182123.6
(22) Anmeldetag: 28.06.2021
(51) Int. Cl.: G01N 21/25, G01N 21/51, G01N 21/64, G01N 21/03, G01N 21/35, G01N 21/01

(54) **VORRICHTUNG ZUR STRAHLUNGSMESSUNG AN EINER BIOLOGISCHEN PROBE IN EINER AUFNAHMEEINRICHTUNG**
DEVICE PERFORMING A RADIATION MEASUREMENT OF A BIOLOGICAL SAMPLE IN A RECEPTACLE-DEVICE
DISPOSITIF EFFECTUANT UNE MESURE DE RAYONNEMENT D'UN ÉCHANTILLON BIOLOGIQUE DANS UN DISPOSITIF-RÉCEPTACLE

(43) Veröffentlichungstag der Anmeldung: 04.01.2023
(73) Patentinhaber: Metavital GmbH, 22397 Hamburg (DE)
(72) Erfinder: Michajlova, Ljudmila, 22397 Hamburg (DE); Kirsanov, Victor, 22397 Hamburg (DE)
(74) Vertreter: RGTH

(56) Entgegenhaltungen:
- EP-A2- 1 909 108
- WO-A2-94/26874
- KR-A- 20160 093 399
- US-A1- 2010 205 139
- US-A1- 2015 353 984
- US-A1- 2016 103 089
- US-A1- 2019 309 241
- US-B1- 6 493 085
- US-B1- 8 858 886

## Beschreibung

Die Erfindung betrifft eine Vorrichtung zur Strahlungsmessung, insbesondere zur Messung von Biophotonen, sowie ein System umfassend eine solche Vorrichtung.

Zur Untersuchung eines Menschen oder eines anderen Lebewesens ist es bekannt, vom Körper des Menschen bzw. des Lebewesens emittierte Strahlung zu messen, um aus dieser Strahlung Informationen über den Zustand des Körpers zu erhalten.

Bisher ist es für die Durchführung einer solchen Messung notwendig, dass der zu untersuchende Körper am Ort der Messung anwesend ist, um die von dem Körper emittierte Strahlung mittels einer entsprechend ausgebildeten Vorrichtung aufnehmen und auswerten zu können. Ferner ist es notwendig, dass bei der Messung speziell geschultes Personal anwesend ist.

Eine solche Messung ist beispielsweise eine Spektrographie-Messung, insbesondere die sogenannte Multidimensionale Nicht-Lineare Spektrographie (MNLS), mittels welcher Eigenschaften von Molekülen, beispielsweise deren Schwingung, untersucht werden, um, insbesondere energetische, organische und psychische, Prozesse im Körper darstellen zu können. Dazu wird der Körper mittels einer Strahlungsquelle mit Strahlung einer bestimmten Wellenlänge, insbesondere Infrarot-Strahlung, bestrahlt und anschließend vom Körper emittierte Strahlung gemessen. Die Ergebnisse, insbesondere sich ergebende Schwingungsmuster, werden mit bereits bekannten Ergebnissen, insbesondere Schwingungsmustern, einer Datenbank abgeglichen.

US 8858886 B1 offenbart ein Fluoreszenz-Messsystem umfassend ein Host-Gerät und eine eigenständige optische Mehrkanal-Kassette. Das Host-Gerät umfasst eine Vertiefungsplattenaufnahme und einen Tisch mit einer optischen Kassettenaufnahme, die sich entlang einer Achse der Vertiefungsplatte erstreckt.

EP 1909108 A2 offenbart ein automatisiertes Analysegerät zur gleichzeitigen Durchführung mehrerer Nukleinsäure-basierter Assays, und insbesondere ein System und ein Verfahren zur Durchführung mehrerer Nukleinsäure-Amplifikationstests, einschließlich Echtzeit- und Endpunkt-Amplifikationen-Assays.

US 2015/0353984 A1 offenbart ein biologisches Sterilisationsindikatorsystem umfassend einen biologischen Sterilisations-Indikator und eine Ablesevorrichtung. Der biologische Sterilisationsindikator kann ein Gehäuse mit einem ersten Teil und einem zweiten Teil umfassen, der zweite Teil, der mit dem ersten Teil verbunden werden kann, wobei der zweite Teil in Bezug auf den ersten Teil, wenn er mit dem ersten Teil verbunden ist, zwischen einer ersten Position und einer zweiten Position beweglich ist.

WO 1994026874 A2 offenbart ein Instrument zum Nachweis der Anwesenheit von Mikroorganismen in menschlichem Gewebe einer Probe, das Mittel zum Halten eines oder mehrerer probenenthaltender Gefäße und Lichtemissionsmittel umfasst. Das Lichtemissionsmittel ist so konfiguriert, dass es emittiertes Licht auf einen Sensor auftreffen lässt, der an einer Innenwand eines probenenthaltenden Gefäßes, das in dem Gefäßhaltemittel gehalten wird, auftrifft.

Nachteilig ist hierbei, dass sowohl der Mensch bzw. Lebewesen als auch das Personal stets an einem Ort sein müssen, um die Messung durchführen zu können.

Es ist wünschenswert, die zuvor beschriebene Messung unabhängig vom Aufenthaltsort des Menschen bzw. des Lebewesens durchführen zu können und ohne, dass speziell geschultes Personal anwesend sein muss.

Der Erfindung liegt daher die Aufgabe zugrunde, eine Vorrichtung zur Untersuchung eines Körpers mittels Strahlungsmessung bereitzustellen, welche eine zeitsparende und flexible Messung ermöglicht.

Diese Aufgabe wird gelöst durch eine Vorrichtung gemäß dem beigefügten Anspruchssatz.

Die Vorrichtung umfasst eine Umlenkeinrichtung zum Umlenken der von der Strahlungsquelle emittierten Strahlung durch die erste Öffnung, wobei die Umlenkeinrichtung bevorzugt in dem Strahlungssensor angeordnet ist. Die Umlenkvorrichtung ermöglicht es vorteilhaft, die Strahlungsquelle flexibel innerhalb der Vorrichtung anordnen zu können, da die Umlenkeinrichtung die Strahlung der Strahlungsquelle grundsätzlich aus einer beliebigen Position innerhalb des Gehäuses durch die erste Öffnung in das Innere der Aufnahmeeinrichtung führen kann. Bevorzugt ist die Umlenkeinrichtung ein Spiegel. Bevorzugt ist die Umlenkeinrichtung in dem Strahlungssensor angeordnet und bevorzugt in den Strahlungssensor, insbesondere in ein Gehäuse des Strahlungssensors, integriert. Bevorzugt sind der Strahlungssensor und/oder die Umlenkeinrichtung derart ausgestaltet, dass keine Strahlung direkt von der Strahlungsquelle in den Strahlungssensor gelangen kann, beispielsweise durch eine entsprechende Abschirmung.

Die Vorrichtung ist insbesondere dazu ausgebildet, die von der biologischen Probe in der Aufnahmeeinrichtung emittierte Strahlung, insbesondere Strahlung in Form von Biophotonen, zu messen und die Messergebnisse zur weiteren Analyse auszugeben. Bei der Probe kann es sich bevorzugt um eine Probe eines Körpers eines Menschen oder eines anderen Lebewesens handeln, welche bevorzugt DNA enthält. Die Probe kann beispielsweise Blut, Urin und/oder Haare sein. Bevorzugt kann die Probe fest oder flüssig sein. Aus hygienischen Gründen kann die Probe bevorzugt in einem Probenbehältnis, beispielsweise in einem Probenröhrchen, angeordnet sein.

Die erfindungsgemäße Vorrichtung ermöglicht es auf vorteilhafte Weise, Informationen über den Zustand eines Körpers zu gewinnen, ohne dass der Körper selbst bei der Messung anwesend sein muss, da die Messung anhand einer vom Körper entnommenen Probe durchgeführt wird. Entsprechend kann die Vorrichtung kompakt ausgeführt werden.

Bevorzugt ist die Vorrichtung tragbar ausgebildet, sodass die Vorrichtung vorteilhaft ortsunabhängig einsetzbar ist. Insbesondere müssen nicht alle Schritte der Strahlungsmessung in der Arzt- oder Naturheilpraxis durchgeführt werden. Ferner kann die Probenentnahme von ungeschulten Personen durchgeführt werden. Beispielsweise kann eine zu untersuchende Person eigenständig die Probenentnahme vornehmen und die Probe an eine Arzt- oder Naturheilpraxis schicken, welche wiederum die Durchführung der Messung mittels der Vorrichtung vornimmt.

Die Probe wird bevorzugt in der Aufnahmeeinrichtung platziert. Anschließend wird die Messung gestartet und es wird Strahlung von der Strahlungsquelle in die Aufnahmeeinrichtung emittiert. Es kommt bevorzugt zu einer Wechselwirkung der Strahlung mit der Probe und die von der Probe emittierte Strahlung wird mittels des Strahlungssensors detektiert. Das von dem Strahlungssensor bei Strahlungseinfall generierte Signal kann von der Vorrichtung an eine Auswerteeinrichtung ausgegeben werden, sodass ein Messergebnis erzeugt wird. In der Auswerteeinrichtung findet bevorzugt ein Abgleich des Messergebnisses mit Vergleichsergebnissen aus einer Datenbank statt. Eine Vorrichtung und eine Auswerteeinheit können zusammen ein System bilden.

Bevorzugt umfasst die Vorrichtung keine Auswerteeinheit zur Auswertung der Messergebnisse. Bevorzugt kann die Vorrichtung eine Einrichtung zur Aufbereitung der Daten zu umfassen, um die Daten vor der Analyse durch eine externe Auswerteeinrichtung aufzubereiten.

Bevorzugt ist die Aufnahmeeinrichtung entnehmbar in der Vorrichtung angeordnet. Dadurch kann die Aufnahmeeinrichtung vorteilhaft zum Einlegen der Probe entnommen werden und anschließend zusammen mit der Probe wieder in die Einrichtung eingesetzt werden.

Bevorzugt weist die Vorrichtung genau eine erste Öffnung zum Hineinführen der Strahlung von der Strahlungsquelle in das Innere der Aufnahmeeinrichtung und zum Hinausführen der Strahlung aus dem Inneren der Aufnahmeeinrichtung auf. Insbesondere weist die Vorrichtung keine weiteren Öffnungen auf, durch welche Strahlung in das Innere der Aufnahmeeinrichtung gelangen kann. Ausgenommen hiervon ist eine bevorzugt vorgesehene, bevorzugt verschließbare, Zugangsöffnung, insbesondere ein Gehäusedeckel, der Vorrichtung, durch welche die Aufnahmeeinrichtung bzw. die Probe aus der Vorrichtung entnehmbar ist.

Alternativ kann mehr als eine Öffnung zum Hineinführen der Strahlung von der Strahlungsquelle in das Innere der Aufnahmeeinrichtung und zum Hinausführen der Strahlung aus dem Inneren der Aufnahmeeinrichtung vorgesehen sein.

Bevorzugt weist die Vorrichtung neben der bzw. den Öffnungen zum Hineinführen der Strahlung von der Strahlungsquelle in das Innere der Aufnahmeeinrichtung und zum Hinausführen der Strahlung aus dem Inneren der Aufnahmeeinrichtung keine weiteren Öffnungen auf, durch welche im geschlossenen Zustand der Vorrichtung Strahlung in das Innere der Vorrichtung und/oder der Aufnahmeeinrichtung gelangen kann. Insbesondere ist die gesamte Vorrichtung derart ausgebildet, dass keine externe Strahlung, also Strahlung, die nicht von der Strahlungsquelle erzeugt wurde, in das Innere der Vorrichtung gelangen kann. Insbesondere kann kein Umgebungslicht in das Innere der Vorrichtung und/oder in das Innere der Aufnahmeeinrichtung gelangen. Dadurch wird vorteilhaft gewährleistet, dass die Probe ausschließlich Strahlung der Strahlungsquelle ausgesetzt wird und nur mit dieser wechselwirken kann.

Bevorzugt ist die Vorrichtung derart ausgebildet, dass ausschließlich Strahlung aus dem Inneren der Aufnahmeeinrichtung, insbesondere durch die erste Öffnung, mit dem Strahlungssensor messbar ist. Insbesondere ist keine externe Strahlung, beispielsweise Umgebungslicht, mittels des Strahlungssensors messbar und es gelangt keine Strahlung aus der Strahlungsquelle direkt, d.h. ohne Umweg über die Aufnahmevorrichtung, von der Strahlungsquelle in den Strahlungssensor. Es wird bevorzugt nur indirekt die Strahlung der Strahlungsquelle gemessen, welche zuvor in das Innere der Aufnahmeeinrichtung emittiert wurde bzw. jene Strahlung der Strahlungsquelle, welche nach Wechselwirkung mit der Probe von der Probe emittiert und/oder reflektiert wird.

Bevorzugt umfasst die Strahlung Infrarot-Strahlung oder besteht aus Infrarot-Strahlung.

Bevorzugt ist vorgesehen, dass die Strahlungsquelle eine Leuchtdiode umfasst und/oder dass der Strahlungssensor einen Fototransistor umfasst. Die Leuchtdiode und/oder der Fototransistor sind bevorzugt zur Emission bzw. Detektion von zur Messung benötigten Strahlung, insbesondere Infrarot-Strahlung, ausgelegt.

Bevorzugt sind die Leuchtdiode und/oder der Fototransistor auf einer Platine angeordnet. Bevorzugt sind die Leuchtdiode und der Fototransistor auf einer gemeinsamen Platine angeordnet. Dadurch wird vorteilhaft eine platzsparende Anordnung der Komponenten in der Vorrichtung ermöglicht.

Bevorzugt umfasst die Vorrichtung ein Gehäuse, insbesondere bestehend aus oder aufweisend Aluminium, wobei die erste Öffnung bevorzugt in dem Gehäuse angeordnet ist. Das Gehäuse ist bevorzugt aus Aluminium hergestellt oder umfasst Aluminium, da Aluminium ein für die Messung geeignetes Material darstellt und insbesondere die Messung nicht negativ beeinflusst. Aluminium wird bevorzugt gegenüber Kunststoff verwendet.

Bevorzugt kann das Gehäuse einen Gehäusedeckel umfassen. Über den Gehäusedeckel kann die Vorrichtung bzw. das Gehäuse geöffnet werden, um insbesondere die Aufnahmeeinrichtung zum Einlegen der Probe entnehmen zu können. Bevorzugt weist der Gehäusedeckel Erhebungen und/oder Vertiefungen, beispielsweise Rillen, auf, um den Gehäusedeckel zum Entfernen von dem Gehäuse leicht greifen zu können.

Bevorzugt umfasst das Gehäuse einen ersten Gehäusebereich zur Aufnahme der Strahlungsquelle und wenigstens eine zweite Öffnung, wobei die von der Strahlungsquelle emittierte Strahlung, bevorzugt ausschließlich, durch die zweite Öffnung aus dem ersten Gehäusebereich emittierbar ist. Der erste Gehäusebereich stellt einen vom Rest des Gehäuseinneren abgetrennten Bereich dar, in den, mit Ausnahme der zweiten Öffnung, keine Strahlung von außen eintreten oder austreten kann.

Bevorzugt umfasst das Gehäuse einen zweiten Gehäusebereich zur Aufnahme des Strahlungssensors, wobei die erste Öffnung im zweiten Gehäusebereich angeordnet ist.

Bevorzugt ist die zweite Öffnung zwischen dem ersten Gehäusebereich und dem zweiten Gehäusebereich angeordnet. Bevorzugt verbindet die zweite Öffnung den ersten Gehäusebereich und den zweiten Gehäusebereich miteinander, sodass die von der Strahlungsquelle emittierte Strahlung durch die zweite Öffnung von dem ersten Gehäusebereich in den zweiten Gehäusebereich emittierbar ist.

Der zweite Gehäusebereich stellt einen vom Rest des Gehäuseinneren abgetrennten Bereich dar, in den, mit Ausnahme der ersten Öffnung und/oder der zweiten Öffnung, keine Strahlung von außen eintreten oder austreten kann.

Bevorzugt sind der erste Gehäusebereich und der zweite Gehäusebereich direkt benachbart zueinander angeordnet. Bevorzugt ist die zweite Öffnung in einer gemeinsamen Gehäusewand des ersten und des zweiten Gehäusebereichs angeordnet, welche den ersten und den zweiten Gehäusebereich voneinander trennt.

Bevorzugt umfasst das Gehäuse einen dritten Gehäusebereich zur Aufnahme der Aufnahmeeinrichtung, wobei im geschlossenen Zustand der Vorrichtung ausschließlich von der Strahlungsquelle erzeugte Strahlung in den dritten Gehäusebereich emittierbar ist. Bevorzugt umfasst der dritte Gehäusebereich den Gehäusedeckel. Bevorzugt ist der dritte Gehäusebereich, insbesondere direkt, benachbart zu dem ersten Gehäusebereich und dem zweiten Gehäusebereich angeordnet.

Bevorzugt verbindet die erste Öffnung den zweiten Gehäusebereich und den dritten Gehäusebereich. Bevorzugt ist die erste Öffnung in einer gemeinsamen Gehäusewand des zweiten und des dritten Gehäusebereichs angeordnet, welche den zweiten und den dritten Gehäusebereich voneinander trennt.

Bevorzugt ist die Platine in dem ersten Gehäusebereich und/oder in dem zweiten Gehäusebereich angeordnet. Bevorzugt erstreckt sich die Platine sowohl in den ersten Gehäusebereich als auch in den zweiten Gehäusebereich. Bevorzugt bildet die Platine einen Bereich der Wandung des ersten Gehäusebereichs und/oder des zweiten Gehäusebereichs.

Bevorzugt ist die Aufnahmeeinrichtung ein Behälter, welcher herausnehmbar in der Vorrichtung, insbesondere in dem dritten Aufnahmebereich, angeordnet ist. Bevorzugt ist der Behälter offen mit einer Einlegeöffnung ausgebildet, sodass die Probe über die Einlegeöffnung in den Behälter einlegbar ist.

Bevorzugt ist die Aufnahmeeinrichtung ein im Wesentlichen zylinderförmiger Behälter. Bevorzugt ist der Behälter an einem ersten Ende offen ausgebildet bzw. weist dort die Einlegeöffnung auf. An einem zweiten Ende ist der Behälter bevorzugt abgerundet ausgebildet bzw. weist abgerundete Kanten auf. Das zweite Ende ist bevorzugt ein Boden des Behälters. Bevorzugt ist der Behälter ein Reagenzglas.

Bevorzugt entspricht eine Öffnungsfläche der ersten Öffnung 0,5% bis 4%, bevorzugt 1% bis 3%, besonders bevorzugt 1,2% bis 2%; ganz besonders bevorzugt 1,4% bis 1,8%, einer radialen Querschnittsfläche des zylinderförmigen Behälters. Die radiale Querschnittsfläche ist eine Fläche, in der der Radius des Zylinders definiert ist, und welche senkrecht zu einer Höhenrichtung des Zylinders angeordnet ist. Die radiale Querschnittsfläche ist bevorzugt äquivalent zu einer Grundfläche des Zylinders bzw. verläuft parallel zu dieser.

Bevorzugt entspricht die Öffnungsfläche der ersten Öffnung 4,0 cm² bis 32,0 cm², bevorzugt 8,0 cm² bis 24,1 cm², besonders bevorzugt 9,7 cm² bis 16,1 cm², ganz besonders bevorzugt 11,3 cm²bis 14,5 cm².

Bevorzugt sind die Öffnungsfläche der ersten Öffnung und/oder die radiale Querschnittsfläche des zylinderförmigen Behälters kreisförmig ausgebildet.

Bevorzugt beträgt die radiale Querschnittsfläche des zylinderförmigen Behälters 650 cm² bis 950 cm², besonders bevorzugt 700 cm² bis 900 cm², weiter besonders bevorzugt 750 cm² bis 850 cm², ganz besonders bevorzugt 780 cm² bis 820 cm².

Bevorzugt weist das Gehäuse, insbesondere der Gehäusedeckel und/oder das Gehäusemittelteil, eine maximale Breite in radialer Querschnittsrichtung betrachtet von 40 cm bis 80 cm, bevorzugt von 55 cm bis 65 cm, besonders bevorzugt 58 cm bis 62 cm, auf.

Bevorzugt umfasst die Aufnahmeeinrichtung Glas, insbesondere Quarzglas, oder besteht aus Glas, insbesondere Quarzglas. Glas, insbesondere Quarzglas, ist vorteilhaft besonders durchlässig für die zur Messung verwendete Strahlung.

Bevorzugt umfasst die Vorrichtung eine Halteeinrichtung zum Halten der Aufnahmeeinrichtung. Bevorzugt kann die Halteeinrichtung in dem Gehäuse angeordnet und/oder in das Gehäuse integriert bzw. einstückig mit dem Gehäuse ausgebildet sein. Alternativ kann die Halteeinrichtung als ein separates Bauteil ausgebildet sein, welches in das Gehäuse einlegbar und/oder in dem Gehäuse befestigbar, insbesondere einklemmbar, ist. Die Halteeinrichtung kann aus Plastik bestehen oder Plastik umfassen. Die Halteeinrichtung dient bevorzugt dazu, die Aufnahmeeinrichtung, welche bevorzugt entnehmbar ausgestaltet ist, in der Vorrichtung zu fixieren. Bevorzugt ist die Halteeinrichtung ebenfalls entnehmbar ausgestaltet, sodass die Halteeinrichtung zusammen mit der Aufnahmeeinrichtung aus der Vorrichtung entnehmbar ist und beispielsweise zum Befüllen der Aufnahmeeinrichtung mit der Probe neben der Vorrichtung abgestellt werden kann.

Der Strahlungssensor ist bevorzugt im Wesentlichen direkt vor der ersten Öffnung angeordnet, um die Strahlung aus dem Inneren der Aufnahmeeinrichtung optimal detektieren zu können. Daher ist es vorteilhaft, die Umlenkeinrichtung in dem Strahlungssensor anzuordnen, da sich dieser vor der ersten Öffnung befindet.

Bevorzugt weist die Vorrichtung eine Anschlusseinrichtung auf, wobei Signale des Strahlungssensors über die Anschlusseinrichtung ausgebbar sind. Insbesondere sind die Signale des Strahlungssensors an die externe Auswerteeinrichtung ausgebbar. Bevorzugt ist die Anschlusseinrichtung zum Anschließen eines Kabels ausgelegt. Alternativ kann die Vorrichtung dazu ausgelegt sein, die Signale des Strahlungssensors drahtlos an die Auswerteeinrichtung zu übertragen. Dazu weist die Vorrichtung bevorzugt eine entsprechende Sendeeinrichtung auf. Die Auswerteeinrichtung kann bevorzugt ein PC, Tablet oder Smartphone sein.

Ferner wird die erfindungsgemäße Aufgabe gelöst durch ein System, umfassend eine Auswerteeinrichtung und eine Vorrichtung mit den zuvor beschriebenen Merkmalen.

Die Erfindung wird nachfolgend anhand der in der Zeichnung dargestellten Ausführungsbeispiele weiter erläutert. Es zeigen:
- Figur 1:: eine perspektivische Ansicht einer Vorrichtung zur Strahlungsmessung mit einem Anschlusskabel,
- Figur 2:: eine Schnittdarstellung durch die Vorrichtung,
- Figur 3:: ein Ausschnitt einer Schnittdarstellung der Vorrichtung,
- Figur 4:: mehrere perspektivische Ansichten eines Gehäusemittelteils der Vorrichtung,
- Figur 5:: mehrere perspektivische Ansichten eines Gehäusedeckels der Vorrichtung,
- Figur 6:: mehrere perspektivische Ansichten eines Gehäusebodens der Vorrichtung,
- Figur 7:: eine perspektivische Ansicht einer Aufnahmeeinrichtung der Vorrichtung,
- Figur 8:: eine perspektivische Ansicht und eine Seitenansicht einer Platine der Vorrichtung,
- Figur 9:: mehrere perspektivische Ansichten einer Halteeinrichtung der Vorrichtung,
- Figur 10:: eine Seitenansicht der Vorrichtung mit dem Anschlusskabel,
- Figur 11:: eine Draufsicht auf die Vorrichtung mit dem Anschlusskabel, und
- Figur 12:: eine perspektivische Ansicht eines Systems umfassend die Vorrichtung und eine Auswerteeinrichtung.

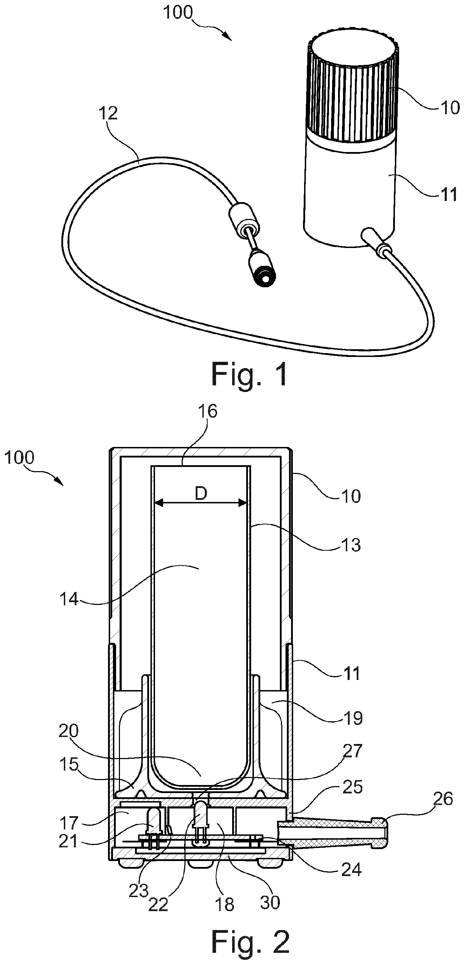

Figur 1 zeigt eine perspektivische Ansicht der Vorrichtung 100. Die Vorrichtung 100 weist ein Gehäuse mit einem Gehäusedeckel 10 und einem Gehäusemittelteil 11 auf. Zur Übertragung von Daten von der Vorrichtung 100 an eine nicht dargestellte externe Auswerteeinrichtung ist die Vorrichtung 100 mit einem Anschlusskabel 12 verbunden.

Figur 2 zeigt eine Querschnittsdarstellung der Vorrichtung 100. Die Vorrichtung weist ein Gehäuse mit dem Gehäusedeckel 10, dem Gehäusemittelteil 11 und einem Gehäuseboden 30 auf. Innerhalb des Gehäuses ist eine Aufnahmeeinrichtung 13 angeordnet, in dessen Inneren 14 eine hier nicht gezeigte Probe angeordnet werden kann. Die Aufnahmeeinrichtung 13 ist ein zylinderförmiger Behälter mit einer Einlegeöffnung 16 und einem zweiten Ende 20, welcher einen Boden des Behälters bildet. Die Aufnahmeeinrichtung 13 weist eine radiale Querschnittsfläche auf, welche in diesem Ausführungsbeispiel kreisförmig ausgebildet ist mit einem Durchmesser D.

Die Aufnahmeeinrichtung 13 ist mittels einer Halteeinrichtung 15 im Gehäuse gehalten. Die Halteeinrichtung 15 und die Aufnahmeeinrichtung 13 sind in einem dritten Gehäusebereich 19 des Gehäuses angeordnet.

In einem unteren Bereich des Gehäuses der Vorrichtung 100 sind ein erster Gehäusebereich 17 und ein zweiter Gehäusebereich 18 angeordnet. In dem ersten Gehäusebereich 17 ist eine Strahlungsquelle 21 in Form einer Leuchtdiode angeordnet. Der erste Gehäusebereich 17 ist mit Ausnahme einer zweiten Öffnung 23 geschlossen ausgebildet, sodass die Strahlung der Strahlungsquelle 21 ausschließlich über die zweite Öffnung 23 aus dem ersten Gehäusebereich 17 hinaustreten kann.

Im zweiten Gehäusebereich 18 ist ein Strahlungssensor 22 in Form eines Fototransistors angeordnet. Der zweite Gehäusebereich 18 ist mit Ausnahme der ersten Öffnung 27 und der zweiten Öffnung 23 geschlossen ausgebildet, sodass Strahlung ausschließlich durch diese beiden Öffnungen in den zweiten Gehäusebereich 18 hinein- bzw. hinaustreten kann.

Die Leuchtdiode und der Fototransistor sind auf einer gemeinsamen Platine 24 angeordnet, wobei die Platine 24 bereichsweise die Wandungen des ersten Gehäusebereichs 17 und des zweiten Gehäusebereichs 18 bildet. In einer Gehäusewand zwischen dem ersten Gehäusebereich 17 und dem zweiten Gehäusebereich 18 ist die zweite Öffnung 23 angeordnet.

Zwischen dem dritten Gehäusebereich 19 und dem zweiten Gehäusebereich 18 ist die erste Öffnung 27 angeordnet. Die Strahlungsquelle 22 ist unmittelbar vor bzw. bereichsweise innerhalb der ersten Öffnung 27 angeordnet, um Strahlung, welche von einer Probe aus dem Inneren 14 der Aufnahmeeinrichtung 13 emittiert wird, optimal detektieren zu können.

Die Vorrichtung 100 weist ferner eine Anschlusseinrichtung 25 zum Anschluss des hier nicht gezeigten Anschlusskabels 12 auf. Zum Schutz des Kabels ist ein Knickschutz 26 vorgesehen, welcher das Anschlusskabel 12 im Bereich der Anschlusseinrichtung 25 umgibt.

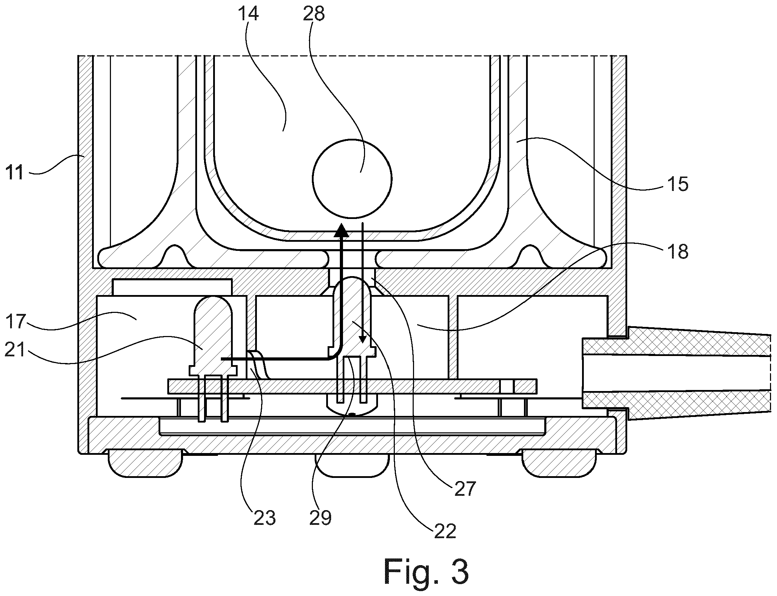

Figur 3 zeigt einen Ausschnitt der Querschnittsdarstellung aus Figur 2. Zusätzlich sind in Figur 3 die Verläufe der Strahlung aus der Strahlungsquelle 21 bzw. aus der Probe 28 in Richtung des Strahlungssensors 22 mit Pfeilen dargestellt. Die in der Strahlungsquelle 23 erzeugte Strahlung passiert die zweite Öffnung 23 und gelangt von dem ersten Gehäusebereich 17 in den zweiten Gehäusebereich 18. Im zweiten Gehäusebereich 18 trifft die Strahlung auf eine in den Strahlungssensor 22 integrierte Umlenkeinrichtung 29, beispielsweise einen Spiegel, und wird durch die erste Öffnung 27 in den dritten Gehäusebereich 19 und das Innere 14 der Aufnahmeeinrichtung 13 zur Probe 28 geführt.

Die Probe 28 wechselwirkt mit der Strahlung und emittiert wiederum Strahlung, welche durch die erste Öffnung 27 zu dem Strahlungssensor 22 gelangt. In dem Strahlungssensor 22 wird bei einfallender Strahlung ein Signal erzeugt, welches über die Anschlusseinrichtung 25 ausgebbar ist.

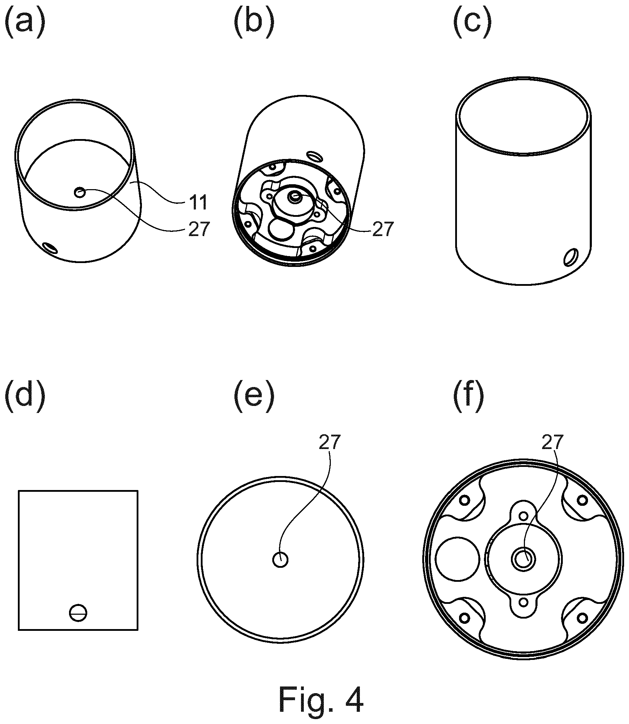

Figuren 4a bis 4f zeigen verschiedene perspektivische Ansichten des Gehäusemittelteils 11 (nur in Figur 4a mit einem Bezugszeichen versehen). In einem Bodenabschnitt des Gehäusemittelteils 11 ist zentral die erste Öffnung 27 angeordnet.

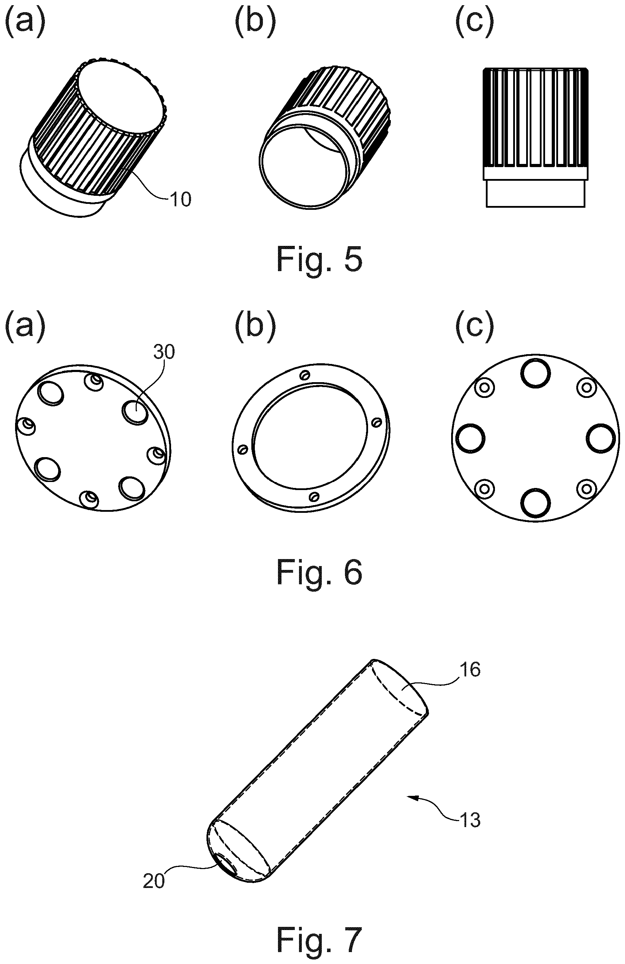

Figuren 5a bis 5c zeigen verschiedene perspektivische Ansichten des Gehäusedeckels 10. An einer Umfangsfläche des Gehäusedeckels 10 sind Rillen angeordnet, um das Öffnen des Gehäuses zu erleichtern.

Figuren 6a bis 6c zeigen verschiedene perspektivische Ansichten des Gehäusebodens 30. Der Gehäuseboden weist Durchgangsöffnungen zur Befestigung des Gehäusebodens 30 am Gehäusemittelteil 11 auf.

Figur 7 zeigt die Aufnahmeeinrichtung 13 in Form eines zylinderförmigen Behälters. Die Aufnahmeeinrichtung 13 weist ein erstes Ende mit einer Einlegeöffnung 16 und ein zweites Ende 20, welches als abgerundeter Boden ausgebildet ist, auf.

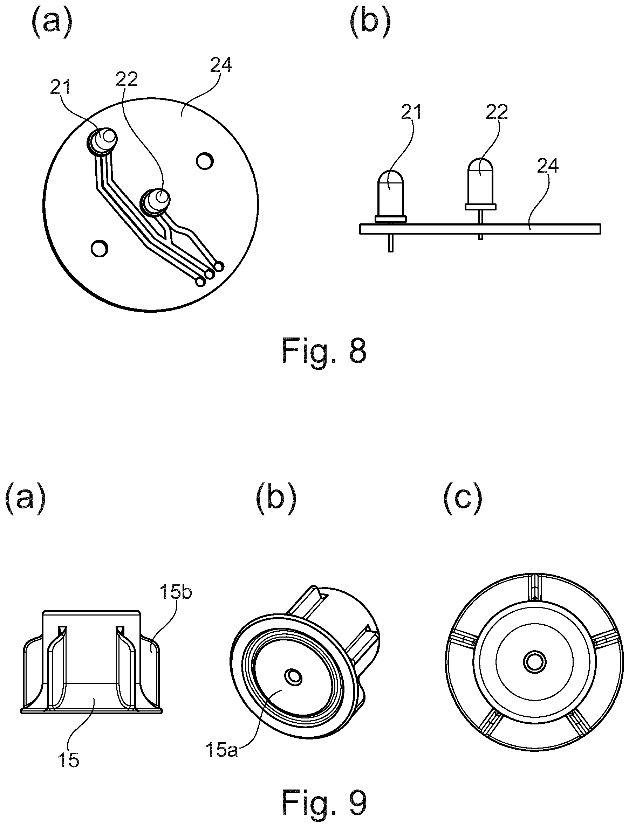

Figuren 8a und 8b zeigen verschiedene perspektivische Ansichten der Platine 24 mit der darauf angeordneten Strahlungsquelle 21 in Form einer Leuchtdiode sowie dem Strahlungssensor 22 in Form eines Fototransistors. Über Leiterbahnen sind die Strahlungsquelle 21 und der Strahlungssensor 22 mit einer nicht dargestellten Anschlusseinrichtung 25 verbunden.

Figuren 9a bis 9 c zeigen verschiedene perspektivische Ansichten der Halteeinrichtung 15. Die Halteeinrichtung 15 weist einen Standboden 15a auf, sodass die Halteinrichtung 15 innerhalb des Gehäuses oder auf einer anderen Oberfläche platziert werden kann. Ferner weist die Halteeinrichtung 15 an einer Außenseite Vorsprünge 15b auf, welche zur Aussteifung und zum Halten der Halteeinrichtung 15 dienen.

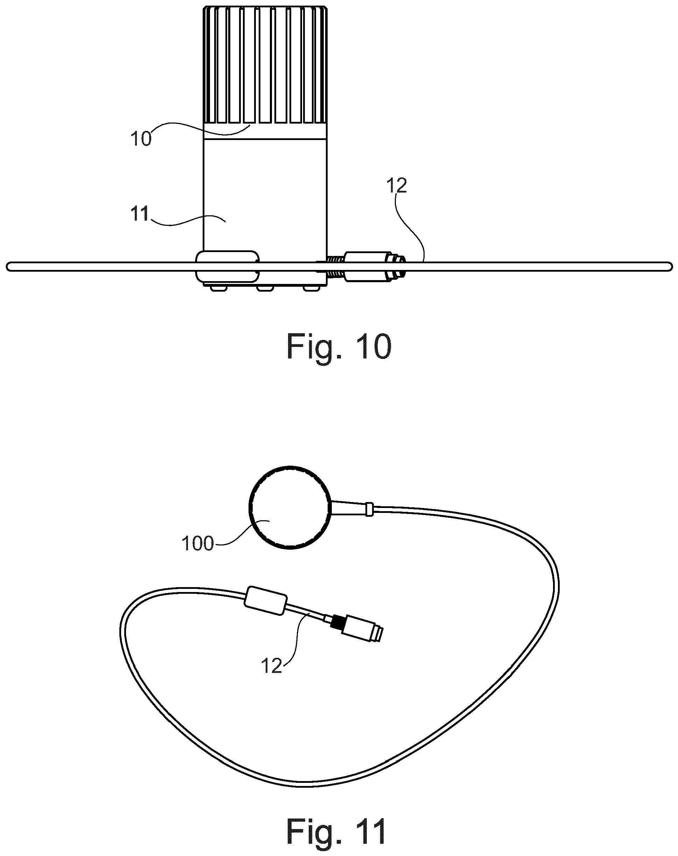

Figur 10 zeigt eine Seitenansicht auf die Vorrichtung 100 mit dem Gehäusemittelteil 11, dem Gehäusedeckel 10 und dem Anschlusskabel 12. In Figur 11 sind die Vorrichtung 100 und das an die Vorrichtung 100 angeschlossene Anschlusskabel 12 in einer Draufsicht gezeigt.

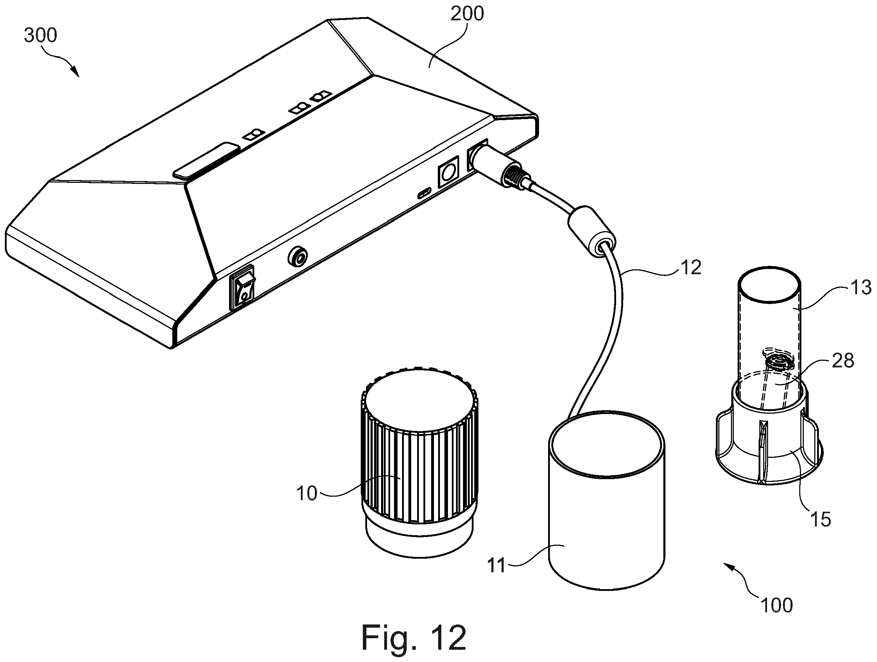

Figur 12 zeigt eine perspektivische Ansicht eines Systems 300 umfassend die Vorrichtung 100 und eine Auswerteeinrichtung 200. Die Vorrichtung 100 ist über das Anschlusskabel 12 mit der Auswerteeinrichtung 200 verbunden. Figur 12 zeigt die Vorrichtung 100 im geöffneten Zustand. Der Gehäusedeckel 10 ist von dem Gehäuse bzw. dem Gehäusemittelteil 11 entfernt und die Halteeinrichtung 15 ist aus dem Gehäuse entnommen. In der Halteeinrichtung 15 ist die Aufnahmeeinrichtung 13 angeordnet, wobei sich innerhalb der Aufnahmevorrichtung 13 die Probe 18 in einem Probenröhrchen befindet.

Zur Durchführung der Strahlungsmessung wird die Halteeinrichtung 15 mit der Aufnahmeeinrichtung 13 und der darin angeordneten Probe 28 in dem Gehäuse bzw. dem Gehäusemittelteil 11 platziert und das Gehäuse mit dem Gehäusedeckel verschlossen.

### Bezugszeichenliste

- 100: Vorrichtung
- 200: Auswerteeinrichtung
- 300: System

- 10: Gehäusedeckel
- 11: Gehäusemittelteil
- 12: Anschlusskabel
- 13: Aufnahmeeinrichtung
- 14: Inneres der Aufnahmeeinrichtung
- 15: Halteeinrichtung
- 15a: Standboden
- 15b: Vorsprünge
- 16: Einlegeöffnung
- 17: erster Gehäusebereich
- 18: zweiter Gehäusebereich
- 19: dritter Gehäusebereich

- 20: zweites Ende des Gehäuses
- 21: Strahlungsquelle
- 22: Strahlungssensor
- 23: zweite Öffnung
- 24: Platine
- 25: Anschlusseinrichtung
- 26: Knickschutz
- 27: erste Öffnung
- 28: Probe
- 29: Umlenkeinrichtung

- 30: Gehäuseboden

- D: Durchmesser der Aufnahmeeinrichtung

## Patentansprüche

1. Vorrichtung (100) zur Durchführung einer Strahlungsmessung umfassend
eine Aufnahmeeinrichtung (13) zur Aufnahme einer biologischen Probe (28),
eine Strahlungsquelle (21) zur Emission von Strahlung in die Aufnahmeeinrichtung (13),
einen Strahlungssensor (22) zur Detektion von Strahlung aus der Aufnahmeeinrichtung (13),
wenigstens eine erste Öffnung (27) zum Hineinführen der Strahlung von der Strahlungsquelle (21) in das Innere (14) der Aufnahmeeinrichtung (13) und zum Hinausführen der Strahlung aus dem Inneren (14) der Aufnahmeeinrichtung (13) zu dem Strahlungssensor (22), wobei die Vorrichtung (100) derart ausgebildet ist, dass ausschließlich von der Strahlungsquelle (21) erzeugte Strahlung in die Aufnahmeeinrichtung (13) emittierbar ist, und
eine Umlenkeinrichtung (29) zum Umlenken der von der Strahlungsquelle (21) emittierten Strahlung durch die erste Öffnung (27), wobei die Umlenkeinrichtung (29) in dem Strahlungssensor (22) angeordnet ist.

2. Vorrichtung (100) nach Anspruch 1, wobei die Vorrichtung (100) derart ausgebildet ist, dass ausschließlich Strahlung aus dem Inneren (14) der Aufnahmeeinrichtung (13)mit dem Strahlungssensor (22) messbar ist.

3. Vorrichtung (100) nach einem der vorgenannten Ansprüche, wobei die Strahlung Infrarot-Strahlung umfasst oder aus Infrarot-Strahlung besteht.

4. Vorrichtung (100) nach einem der vorgenannten Ansprüche, wobei die Strahlungsquelle (21) eine Leuchtdiode umfasst und/oder wobei der Strahlungssensor (22) einen Fototransistor umfasst.

5. Vorrichtung (100) nach einem der vorgenannten Ansprüche, umfassend ein Gehäuse wobei die erste Öffnung (27) bevorzugt in dem Gehäuse angeordnet ist.

6. Vorrichtung (100) nach Anspruch 5, wobei das Gehäuse einen ersten Gehäusebereich (17) zur Aufnahme der Strahlungsquelle (21) und wenigstens eine zweite Öffnung (23) umfasst, wobei die von der Strahlungsquelle (21) emittierte Strahlung durch die zweite Öffnung (23) aus dem ersten Gehäusebereich (17) emittierbar ist.

7. Vorrichtung (100) nach Anspruch 5 oder 6, wobei das Gehäuse einen zweiten Gehäusebereich (18) zur Aufnahme des Strahlungssensors (22) umfasst, wobei die erste Öffnung (27) im zweiten Gehäusebereich (18) angeordnet ist.

8. Vorrichtung (100) nach Anspruch 6 und 7, wobei die zweite Öffnung (23) zwischen dem ersten Gehäusebereich (17) und dem zweiten Gehäusebereich (18) angeordnet ist und den ersten Gehäusebereich (17) und den zweiten Gehäusebereich (18) miteinander verbindet, sodass die von der Strahlungsquelle (21) emittierte Strahlung durch die zweite Öffnung (23) von dem ersten Gehäusebereich (17) in den zweiten Gehäusebereich (18) emittierbar ist.

9. Vorrichtung (100) nach einem der vorgenannten Ansprüche 5 bis 8, wobei das Gehäuse einen dritten Gehäusebereich (19) zur Aufnahme der Aufnahmeeinrichtung (13) umfasst, wobei im geschlossenen Zustand der Vorrichtung (100) ausschließlich von der Strahlungsquelle (21) erzeugte Strahlung in den dritten Gehäusebereich (19) emittierbar ist.

10. Vorrichtung (100) nach einem der vorgenannten Ansprüche, wobei die Aufnahmeeinrichtung (13) ein im Wesentlichen zylinderförmiger Behälter ist.

11. Vorrichtung (100) nach Anspruch 10, wobei eine Öffnungsfläche der ersten Öffnung (27) 1% bis 2,2% einer radialen Querschnittsfläche des zylinderförmigen Behälters entspricht.

12. Vorrichtung (100) nach einem der vorgenannten Ansprüche, wobei die Aufnahmeeinrichtung (13) Glas umfasst oder aus Glas besteht.

13. Vorrichtung (100) nach einem der vorgenannten Ansprüche, umfassend eine Halteeinrichtung (15) zum Halten der Aufnahmeeinrichtung (15).

14. Vorrichtung (100) nach einem der vorgenannten Ansprüche, wobei Signale des Strahlungssensors (22) über die Anschlusseinrichtung (25) ausgebbar sind.

15. System (300), umfassend eine Auswerteeinrichtung (200) und eine Vorrichtung (100) nach einem der vorgenannten Ansprüche.

## Claims

1. Device (100) for carrying out a radiation measurement, comprising
a receiving device (13) for receiving a biological sample (28),
a radiation source (21) for emitting radiation into the receiving device (13),
a radiation sensor (22) for detecting radiation from the receiving device (13),
at least one first opening (27) for introducing the radiation from the radiation source (21) into the interior (14) of the receiving device (13) and for guiding the radiation out of the interior (14) of the receiving device (13) to the radiation sensor (22), wherein the device (100) is configured in such a way that only radiation generated by the radiation source (21) can be emitted into the receiving device (13), and
a deflecting device (29) for deflecting the radiation emitted by the radiation source (21) through the first opening (27), wherein the deflecting device (29) is arranged in the radiation sensor (22).

2. Device (100) according to claim 1, wherein the device (100) is configured in such a way that only radiation from the interior (14) of the receiving device (13) can be measured with the radiation sensor (22).

3. Device (100) according to one of the preceding claims, wherein the radiation comprises infrared radiation or consists of infrared radiation.

4. Device (100) according to one of the preceding claims, wherein the radiation source (21) comprises a light-emitting diode and/or wherein the radiation sensor (22) comprises a phototransistor.

5. Device (100) according to one of the preceding claims, comprising a housing, wherein the first opening (27) is preferably arranged in the housing.

6. Device (100) according to claim 5, wherein the housing comprises a first housing portion (17) for receiving the radiation source (21) and at least one second opening (23), wherein the radiation emitted by the radiation source (21) can be emitted from the first housing portion (17) through the second opening (23).

7. Device (100) according to claim 5 or 6, wherein the housing comprises a second housing portion (18) for receiving the radiation sensor (22), wherein the first opening (27) is arranged in the second housing portion (18).

8. Device (100) according to claim 6 and 7, wherein the second opening (23) is arranged between the first housing portion (17) and the second housing portion (18) and connects the first housing portion (17) and the second housing portion (18) with each other, so that the radiation emitted by the radiation source (21) can be emitted through the second opening (23) from the first housing portion (17) into the second housing portion (18).

9. Device (100) according to of the preceding claims 5 to 8, wherein the housing comprises a third housing portion (19) for receiving the receiving device (13), wherein, in the closed state of the device (100), only radiation generated by the radiation source (21) can be emitted into the third housing portion (19).

10. Device (100) according to one of the preceding claims, wherein the receiving device (13) is a substantially cylindrical container.

11. Device (100) according to claim 10, wherein an opening area of the first opening (27) corresponds to 1% to 2.2% of a radial cross-sectional area of the cylindrical container.

12. Device (100) according to one of the preceding claims, wherein the receiving device (13) comprises glass or consists of glass.

13. Device (100) according to one of the preceding claims, comprising a holding device (15) for holding the receiving device (15).

14. Device (100) according to one of the preceding claims, wherein signals of the radiation sensor (22) can be output via the connection device (25).

15. System (300) comprising an evaluation device (200) and a device (100) according to one of the preceding claims.

## Revendications

1. Dispositif (100), destiné à procéder à une mesure d'un rayonnement, comprenant
un système de réceptacle (13), destiné à réceptionner un échantillon (28) biologique,
une source de rayonnement (21) destinée à émettre un rayonnement dans le système de réceptacle (13),
un capteur de rayonnement (22), destiné à détecter un rayonnement à partir du système de réceptacle (13),
au moins un premier orifice (27), destiné à guider le rayonnement de la source de rayonnement (21) vers l'intérieur (14) du système de réceptacle (13) et à guider vers l'extérieur le rayonnement à partir de l'intérieur (14) du système de réceptacle (13) vers le capteur de rayonnement (22), le dispositif (100) étant conçu de telle sorte qu'exclusivement un rayonnement généré par la source de rayonnement (21) soit émissible dans le système de réceptacle (13), et
un système de renvoi (29), destiné à renvoyer le rayonnement émis par la source de rayonnement (21) à travers le premier orifice (27), le système de renvoi (29) étant placé dans le capteur de rayonnement (22).

2. Dispositif (100) selon la revendication 1, le dispositif (100) étant conçu de telle sorte qu'exclusivement un rayonnement à partir de l'intérieur (14) du système de réceptacle (13) soit mesurable avec le capteur de rayonnement (22).

3. Dispositif (100) selon l'une quelconque des revendications précédentes, le rayonnement comprenant un rayonnement infrarouge ou étant constitué d'un rayonnement infrarouge.

4. Dispositif (100) selon l'une quelconque des revendications précédentes, la source de rayonnement (21) comprenant une diode électroluminescente et / ou le capteur de rayonnement (22) comprenant un phototransistor.

5. Dispositif (100) selon l'une quelconque des revendications précédentes, comprenant un boîtier, le premier orifice (27) étant placé de préférence dans le boîtier.

6. Dispositif (100) selon la revendication 5, le boîtier comprenant une première zone de boîtier (17), destinée à réceptionner la source de rayonnement (21) et au moins un deuxième orifice (23), le rayonnement émis par la source de rayonnement (21) étant émissible à travers le deuxième orifice (23) à partir de la première zone de boîtier (17).

7. Dispositif (100) selon la revendication 5 ou 6, le boîtier comprenant une deuxième zone de boîtier (18), destinée à réceptionner le capteur de rayonnement (22), le premier orifice (27) étant placé dans la deuxième zone de boîtier (18).

8. Dispositif (100) selon la revendication 6 et 7, le deuxième orifice (23) étant placé entre la première zone de boîtier (17) et la deuxième zone de boîtier (18) et reliant l'une à l'autre la première zone de boîtier (17) et la deuxième zone de boîtier (18), de telle sorte que la rayonnement émis par la source de rayonnement (21) soit émissible à partir du deuxième orifice (23) de la première zone de boîtier (17) dans la deuxième zone de boîtier (18).

9. Dispositif (100) selon l'une quelconque des revendications précédentes 5 à 8, le boîtier comprenant une troisième zone de boîtier (19), destinée à réceptionner le système de réceptacle (13), lorsque le dispositif (100) est fermé, exclusivement un rayonnement émis par la source de rayonnement (21) étant émissible dans la troisième zone de boîtier (19).

10. Dispositif (100) selon l'une quelconque des revendications précédentes, le système de réceptacle (13) étant un réservoir de forme sensiblement cylindrique.

11. Dispositif (100) selon la revendication 10, une surface d'orifice du premier orifice (27) correspondant à de 1 % à 2,2 % d'une surface de section transversale radiale du réservoir de forme cylindrique.

12. Dispositif (100) selon l'une quelconque des revendications précédentes, le système de réceptacle (13) comprenant du verre ou étant constitué de verre.

13. Dispositif (100) selon l'une quelconque des revendications précédentes, comprenant un système de maintien (15), destiné à maintenir le système de réceptacle (15).

14. Dispositif (100) selon l'une quelconque des revendications précédentes, des signaux du capteur de rayonnement (22) étant susceptibles d'être délivrés par l'intermédiaire du système de raccordement (25).

15. Système (300), comprenant un système d'évaluation (200) et un dispositif (100) selon l'une quelconque des revendications précédentes.
